# FASCICULE DE BREVET EUROPEEN

(11) **EP 0 486 341 B1**
(45) Date de publication et mention de la délivrance du brevet: **04.05.1994**
(21) Numéro de dépôt: 91402805.5
(22) Date de dépôt: 22.10.1991
(51) Int. Cl.: F16D 65/22, F16D 51/22, F16D 65/56

(54) **Frein à tambour à commande mécanique**
Mechanisch betätigbare Trommelbremse
Mechanically actuated drum brake

(30) Priorité: 13.11.1990 FR 9014066
(43) Date de publication de la demande: 20.05.1992
(73) Titulaire: ALLIEDSIGNAL EUROPE SERVICES TECHNIQUES, 93700 Drancy (FR)
(72) Inventeur: Courbot, Pierre, Bendix Europe Services Techniques, F-93700 Drancy (FR)
(74) Mandataire: Bentz, Jean-Paul

(56) Documents cités:
- EP-A- 0 142 421
- EP-A- 0 240 127
- EP-A- 0 388 057
- FR-A- 593 026
- FR-A- 2 604 230
- GB-A- 1 314 230
- US-A- 2 945 564
- US-A- 4 787 485

## Description

La présente invention concerne les freins à tambour à commande mécanique, cette commande mécanique pouvant constituer le moyen principal d'actionnement de ce frein à tambour, ou un moyen auxiliaire d'actionnement dans le cas où le frein à tambour possède déjà un moteur principal de frein. Dans ce dernier cas, la commande mécanique peut constituer un frein de parc encore appelé frein à main ou un frein de secours.

De façon connue, les freins à tambour sont constitués de deux segments présentant chacun une âme et une jante dont la face en regard du tambour reçoit une garniture de friction, le frein à tambour étant disposé sur une plaque support solidarisée au porte fusée de la roue auquel il est associé, le tambour étant solidaire de la roue à freiner.

Généralement, il est prévu un levier de commande mécanique articulé à l'une de ses extrémités sur l'âme d'un des segments et comportant, en un point intermédiaire, proche de cette articulation, une encoche prévue pour coopérer avec une entretoise permettant de solliciter en écartement les segments sous l'action d'un câble de manoeuvre accroché à l'autre extrémité du levier.

De tels freins à tambour sont bien connus de l'Homme de l'Art. Le document EP-A-0 142 421 décrit, par exemple, un levier de commande mécanique pour un tel frein. Toutefois, selon l'enseignement de ce document, le câble de commande du levier doit être monté sur le frein en phase finale d'assemblage de ce dernier tant qu'il n'est pas encore recouvert par le tambour. Il est ensuite d'usage de faire une ou plusieurs boucles avec le câble pour éviter que ce dernier dans son état libre, soit une gêne lors du montage du frein sur le châssis du véhicule. Cependant, de telles boucles restent un handicap pour le constructeur et il est souhaitable que la pose du câble puisse être différée jusqu'à ce que toutes les pièces du châssis du véhicule soient assemblées y compris le frein avec son tambour et que le câble puisse être seulement après, relié au frein.

C'est ainsi qu'il a été proposé, par exemple par les documents GB-A-1 314 230 ou US-A-2 945 564, d'articuler le levier d'actionnement sur l'entretoise elle-même, le levier, sur lequel le câble de commande est monté, passant à travers une ouverture de la plaque support. De cette façon, le câble de commande peut être fixé au frein après que ce dernier soit monté sur le châssis du véhicule.

De tels dispositifs présentent néanmoins de nombreux inconvénients : l'articulation du levier d'actionnement se faisant sur l'entretoise, pièce mobile par essence, il est nécessaire de trouver un point d'appui pour le fonctionnement du levier. Selon les documents précités, le point d'appui fixe est fourni par la surface de référence constituée par la face interne de la plaque support, sur laquelle vient reposer l'entretoise. Il s'ensuit alors que l'actionnement du levier provoque des frottements importants de l'entretoise sur la plaque support, augmentant par là l'effort à vaincre pour écarter les segments l'un de l'autre, provoquant une usure de l'entretoise et de la plaque support, en induisant des contraintes supplémentaires au sein de la plaque support.

De plus, ces dispositifs ne permettent pas de déverrouiller le frein pour faciliter l'installation du tambour de frein, et ils se prêtent mal à une pose automatisée du câble de commande. Un autre inconvénient de ces dispositifs réside en ce que, du fait de l'absence de réglage automatique, la course du câble de commande augmente avec l'usure des garnitures de friction.

La présente invention a donc pour but de proposer un frein à tambour dont le système d'actionnement mécanique soit simple, fiable et robuste, n'implique pas de contrainte parasite sur la plaque support, soit d'installation simple et automatisable, et dont la course de commande soit constante quelle que soit l'usure des garnitures de friction.

Dans ce but, l'invention propose un frein à tambour à deux segments présentant chacun une âme et une jante dont la face en regard du tambour reçoit une garniture de friction, le frein à tambour étant disposé sur une plaque support, l'âme de chaque segment comportant une encoche coopérant avec une entretoise déterminant l'écartement des segments, l'entretoise portant au voisinage d'une de ses extrémités un pivot sur lequel est articulé un levier d'actionnement s'étendant sensiblement perpendiculairement à la plaque support au travers d'une ouverture pratiquée dans celle-ci et susceptible de coopérer avec un des segments.

Selon l'invention, l'actionnement du frein à tambour est obtenu par une action et une réaction simultanées sur le levier d'actionnement et sur l'entretoise.

De préférence, l'entretoise comporte une extension s'étendant sensiblement perpendiculairement à celle-ci et la plaque support au travers de l'ouverture pratiquée dans cette plaque pour le passage du levier d'actionnement.

Selon un mode avantageux de réalisation, une butée est formée sur le levier d'actionnement pour coopérer avec la virole d'un câble dont la gaine vient coopérer avec une butée formée sur la partie de réaction de l'entretoise.

La présente invention sera mieux comprise et d'autres buts, objets et avantages apparaîtront plus clairement à la lecture de la description qui suit d'un mode préféré de réalisation donné à titre d'exemple non limitatif en référence aux dessins annexés sur lesquels :
- La Figure 1 représente une vue de face d'un frein à tambour réalisé conformément à la présente invention,
- La Figure 2 représente une vue en coupe du frein à tambour de l'invention selon la ligne II - II de la Figure 1,
- La Figure 3 représente une vue analogue à celle de la Figure 2, le frein à tambour étant équipé de son câble de commande,
- La Figure 4 représente une vue en coupe du dispositif d'actionnement mécanique selon la ligne IV-IV de la Figure 2.

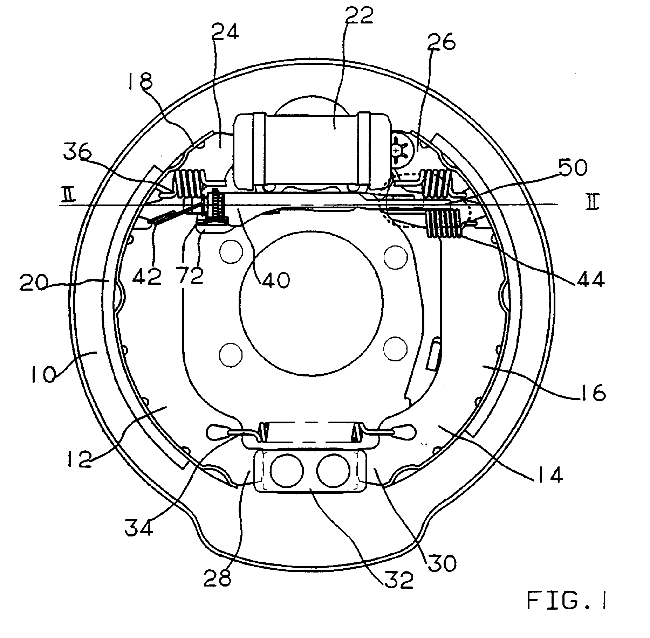

Le frein à tambour représenté Figure 1 comporte une plaque support 10 qui reçoit en coulissement deux segments 12 et 14 comportant chacun une âme 16 et une jante 18, cette dernière recevant des garnitures de friction 20. Ces garnitures de friction 20 sont susceptibles d'entrer en engagement de friction avec un tambour tournant (non représenté) au travers d'un moteur de frein 22 placé entre deux extrémités adjacentes 24 et 26 des segments 12 et 14 respectivement. Les deux autres extrémités 28 et 30 des segments prennent appui sur une pièce d'ancrage 32 au moyen d'un ressort 34, la pièce d'ancrage 32 étant solidaire de la plaque support 10. De même un ressort 36 maintient les extrémités 24 et 26 des segments en appui sur une entretoise 40, des encoches complémentaires étant prévues aux extrémités de l'entretoise 40 et dans les âmes 16 des segments 12 et 14. L'entretoise 40 est maintenue en contact avec le segment 12 par un ressort 42, et avec le segment 14 par un ressort 44.

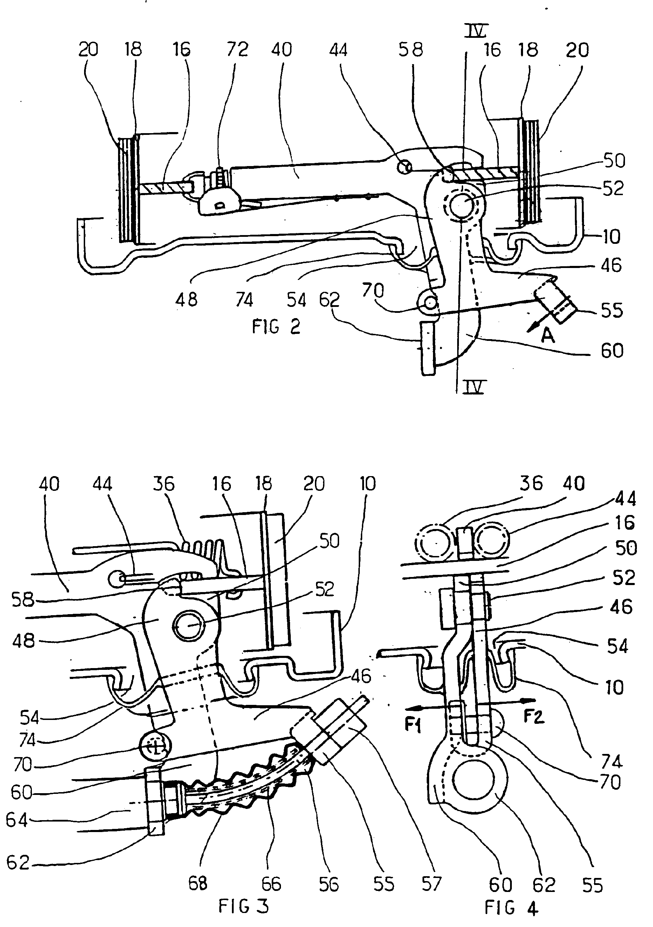

Comme on le voit mieux sur les Figures 2, 3 et 4, l'actionnement du frein est réalisé au travers d'un dispositif mécanique comprenant un levier 46 articulé au voisinage d'une de ses extrémités 48 sur l'entretoise 40 et plus précisément à proximité de l'extrémité 50 de celle-ci au moyen d'un axe 52 formant pivot. L'autre extrémité libre du levier 46 est située de l'autre côté de la plaque support 10 grâce à une ouverture 54 pratiquée dans celle-ci, et forme une butée 55 pour la virole 57 d'un câble de manoeuvre 56 relié à un levier ou tout autre dispositif d'actionnement situé dans l'habitacle du véhicule (non représenté).

D'une façon conventionnelle, le levier 46 coopère avec l'entretoise 40, par l'intermédiaire du pivot 52, et avec l'âme 16 du segment 14, par l'intermédiaire d'une surface de came 58 à son extrémité 48 de sorte qu'une action sur le câble de commande 56 dans le sens de la flèche A sur la Figure 2 provoque un mouvement relatif de l'âme 16 du segment 14 et de l'extrémité 50 de l'entretoise 40, assurant donc l'écartement des segments 12 et 14 pour une action de freinage.

Conformément à l'invention, l'entretoise 40 est pourvue, à son extrémité 50, d'une extension 60 s'étendant sensiblement dans le même plan et dans une direction sensiblement perpendiculaire à sa direction principale, l'extension 60 traversant elle aussi l'ouverture 54 de la plaque support 10. L'extension 60 est à son tour formée avec une partie 62, s'étendant perpendiculairement à l'extension 60 et au plan de la plaque support 10, de façon à former une butée pour la gaine 64 du câble de commande 56.

On comprend donc aisément qu'une action de freinage effectuée par le conducteur du véhicule est transmise par le câble 56 au levier 46, l'extension 60 de l'entretoise 40, portant la butée 62 de la gaine 64, servant d'élément de réaction à l'action exercée par le câble 56. Le levier 46 et la partie de réaction 60 de l'entretoise 40 fonctionnent comme une pince à écarter dont l'articulation est le pivot 52, le rapprochement d'une branche provoquant, par la surface de came 58, l'écartement de l'entretoise 40 et de l'âme 16 du segment 14. On voit donc que l'action et la réaction du système de câble sont supportées respectivement par le levier 46 et l'extension 60 de l'entretoise 40, et qu'ainsi aucune contrainte parasite n'est engendrée au sein de la plaque support 10. De plus, grâce à cette disposition avantageuse, les frottements entre les différents pièces en mouvement relatif sont réduits au minimum, par un choix judicieux de la position du pivot 52 par rapport à celle de la surface de came 58.

De façon avantageuse, on pourra disposer un ressort de rappel 66 entre la butée de câble 55 formée sur le levier 46 et la butée de gaine 62 formée sur la partie de réaction 60 de l'entretoise 40, ainsi qu'un soufflet élastique 68 autour du ressort 66 entre les deux butées 55 et 62, pour éviter l'intrusion d'éléments nuisibles entre le câble 56 et sa gaine 64. On pourra également prévoir sur le levier 46 une butée 70, réalisée sous forme d'une goupille, d'une vis, d'un rivet ou d'une patte venue de matière avec le levier et pliée à 90° pour limiter le débattement du levier 46 sous l'action du ressort 66 et pour maintenir constante la position relative des leviers 46 et 60.

La longueur de la butée 70 pourra avantageusement être choisie de telle façon que, par une simple action dans le sens des flèches F1 et F2 de la Figure 4, entre la partie de réaction 60 de l'entretoise et le levier 46 respectivement, par exemple avec un tournevis, la butée 70 puisse ne plus être engagée avec la partie de réaction 60 de l'entretoise 40, permettant ainsi le rapprochement maximum des segments 12 et 14 sous l'effet du ressort 36 afin de faciliter le montage et le démontage du tambour de frein sur la plaque support 10 entièrement équipée. Il suffira alors, une fois le tambour de frein installé et par l'intermédiaire du câble 56 et de sa gaine 64, d'appliquer respectivement au levier 46 et à la partie de réaction 60 de l'entretoise 40, une force dans le sens de la flèche A de la Figure 2 pour remettre à sa place la butée 70 par rapport à la partie de réaction 60 et ainsi rendre le frein à tambour opérationnel.

On pourra également remarquer que dans le cas où, comme cela a été représenté sur la Figure 1, le frein à tambour est déjà équipé d'un moteur de frein 22, par exemple hydraulique, l'entretoise 40 peut comporter un dispositif de rattrapage automatique de l'usure des garnitures de frein, comme décrit dans FR-A-2 604 230, désigné dans son ensemble par la référence 72. La commande mécanique d'actionnement du frein ci-dessus décrite peut alors avantageusement servir de frein de parc ou de frein de secours, la disposition avantageuse de la butée de câble 55 sur le levier 46 et de la butée de gaine de câble 62 sur la partie de réaction 60 de l'entretoise 40 permettant une course d'actionnement du câble constante quelle que soit l'usure des garnitures de frictions, cette dernière ayant été compensée par le dispositif 72 agissant en écartement des segments 24 et 26 grâce à l'entretoise 40.

Un autre avantage procuré par l'invention réside dans le fait que, par exemple pour tenir compte de problèmes d'encombrement ou de place disponible, les rôles des éléments d'action et de réaction peuvent être facilement inversés. En d'autres termes, il est très facile de réaliser la partie 62 de l'extension 60 de façon à ce qu'elle forme la butée de la virole du câble de manoeuvre, la partie 55 formant alors butée pour la gaine du câble, les autres parties restant inchangées, de même que le fonctionnement du frein à tambour.

On a donc bien réalisé conformément à la présente invention un système d'actionnement mécanique pour un frein à tambour remarquablement simple, fiable et robuste. Son fonctionnement ne génère aucune contrainte sur la plaque support 10, et il est d'installation et d'entretien facile grâce à la possibilité de déverrouillage du système. De plus, grâce à la disposition avantageuse du dispositif d'actionnement, la course d'actionnement du câble de commande reste constante quelle que soit l'usure des garnitures de friction.

On pourra également avantageusement prévoir un capuchon élastique 74 pour obturer de façon étanche l'ouverture 54 dans la plaque support 10, ce capuchon élastique étant traversé de façon étanche par le levier 46 et la partie de réaction 60 de l'entretoise 40.

## Revendications

1. Frein à tambour à deux segments (12, 14) présentant chacun une âme (16) et une jante (18) dont la face en regard du tambour reçoit une garniture de friction (20), le frein à tambour étant disposé sur une plaque support (10), l'âme (16) de chaque segment (12, 14) comportant une encoche coopérant avec une entretoise (40) déterminant l'écartement des segments (12, 14), l'entretoise (40) portant au voisinage d'une de ses extrémités (50) un pivot (52) sur lequel est articulé un levier d'actionnement (46) s'étendant sensiblement perpendiculairement à la plaque support (10) au travers d'une ouverture (54) pratiquée dans celle-ci et susceptible de coopérer avec un des segments, caractérisé en ce que l'actionnement du frein à tambour est obtenu par une action et une réaction simultanées sur le levier d'actionnement (46) et sur l'entretoise (40).

2. Frein à tambour selon la revendication 1, caractérisé en ce que l'entretoise (40) comporte une extension (60) s'étendant sensiblement perpendiculairement à la plaque support (10) au travers de l'ouverture (54) pratiquée dans celle-ci.

3. Frein à tambour selon la revendication 2, caractérisé en ce que l'extension (60) de l'entretoise (40) comporte une partie (62) s'étendant dans un plan sensiblement perpendiculaire à celui de l'entretoise (40) et à celui de la plaque support (10), sur laquelle est formée une butée (62).

4. Frein à tambour selon la revendication 3, caractérisé en ce qu'il est actionné par un câble (56) à gaine (64), le câble (56) comportant à son extrémité une virole (57), la gaine (64) et la virole (57) prenant appui chacune sur une butée (62, 55), l'une (62) étant formée sur l'extension (60) de l'entretoise (40), l'autre (55) étant formée sur le levier d'actionnement (46).

5. Frein à tambour selon la revendication 4, caractérisé en ce qu'un ressort de rappel (66) est disposé entre la butée (55) formée sur le levier d'actionnement (46) et la butée (62) formée sur l'extension (60) de l'entretoise (40).

6. Frein à tambour selon la revendication 5, caractérisé en ce qu'un soufflet élastique (68) est disposé autour du ressort de rappel (66) entre la butée (55) formée sur le levier d'actionnement (46) et la butée (62) formée sur l'extension (60) de l'entretoise (40).

7. Frein à tambour selon la revendication 5, caractérisé en ce que le levier d'actionnement (46) comporte une butée d'arrêt (70) coopérant avec l'extension (60) formée sur l'entretoise (40) sous l'effet du ressort de rappel (66).

8. Frein à tambour selon la revendication 7, caractérisé en ce que la butée d'arrêt (70) formée sur le levier d'actionnement (46) est constituée par un rivet, une vis, une goupille ou une patte venue de matière avec le levier d'actionnement (46) et repliée selon un angle sensiblement droit.

9. Frein à tambour selon quelconque des revendications précédentes, caractérisé en ce qu'il comporte de plus un moteur d'actionnement (22).

10. Frein à tambour selon la revendication 9, caractérisé en ce que l'entretoise comporte des moyens (72) de rattrapage automatique de l'usure des garnitures de friction (20).

11. Frein à tambour selon l'une quelconque des revendications 2 à 10, caractérisé en ce qu'un capuchon élastique (74) est disposé dans l'ouverture (54) pratiquée dans la plaque support (10) pour assurer l'étanchéité de la plaque support (10), du levier d'actionnement (46) et de l'extension (60) de l'entretoise (40).

## Patentansprüche

1. Trommelbremse mit zwei Backen (12, 14), die jeweils einen Steg (16) und einen Kranz (18) aufweisen, dessen der Trommel zugewandte Seite einen Reibbelag (20) erhält, wobei die Trommelbremse auf einer Trägerplatte (10) angeordnet ist, wobei der Steg (16) jeder Backe (12, 14) eine Kerbe enthält, die mit einem Zwischenelement (40) zusammenwirkt, das den Abstand der Backen (12, 14) bestimmt, wobei das Zwischenelement (40) in der Nähe von einem seiner Enden (50) einen Zapfen (52) trägt, an dem ein Betätigungshebel (46) angelenkt ist, der sich im wesentlichen senkrecht zur Trägerplatte (10) durch eine Öffnung (54) erstreckt, die in dieser angebracht ist, und der in der Lage ist, mit einer der Backen zusammenzuwirken, dadurch gekennzeichnet, daß die Betätigung der Trommelbremse durch gleichzeitige Wirkung und Rückwirkung auf den Betätigungshebel (46) und das Zwischenelement (40) erhalten wird.

2. Trommelbremse nach Anspruch 1, dadurch gekennzeichnet, daß das Zwischenelement (40) einen Fortsatz (60) enthält, der sich im wesentlichen senkrecht zur Trägerplatte (10) durch die in ihr angebrachte Öffnung (54) erstreckt.

3. Trommelbremse nach Anspruch 2, dadurch gekennzeichnet, daß der Fortsatz (60) des Zwischenelements (40) einen Abschnitt (62) enthält, der sich in einer Ebene erstreckt, die im wesentlichen senkrecht zu der des Zwischenelements (40) und zu der der Trägerplatte (10) ist, und an dem ein Anschlag (62) ausgebildet ist.

4. Trommelbremse nach Anspruch 3, dadurch gekennzeichnet, daß sie durch ein Kabel (56) mit einem Mantel (64) betätigt wird, wobei das Kabel (56) an seinem Ende eine Preßklemme (57) aufweist, wobei der Mantel (64) und die Preßklemme (57) an jeweils einem Anschlag (62, 55) in Anlage geraten, von denen einer (62) am Fortsatz (60) des Zwischenelements (40) und der andere (55) am Betätigungshebel (46) gebildet ist.

5. Trommelbremse nach Anspruch 4, dadurch gekennzeichnet, daß zwischen dem am Betätigungshebel (46) gebildeten Anschlag (55) und dem am Fortsatz (60) des Zwischenelements (40) gebildeten Anschlag (62) eine Rückstellfeder (66) angeordnet ist.

6. Trommelbremse nach Anspruch 5, dadurch gekennzeichnet, daß um die Rückstellfeder (66) herum zwischen dem am Betätigungshebel (46) gebildeten Anschlag (55) und dem am Fortsatz (60) des Zwischenelements (40) gebildeten Anschlag (62) ein elastischer Balg (68) angeordnet ist.

7. Trommelbremse nach Anspruch 5, dadurch gekennzeichnet, daß der Betätigungshebel (46) einen Endanschlag (70) enthält, der unter der Wirkung der Rückstellfeder (66) mit dem am Zwischenelement (40) gebildeten Fortsatz (60) zusammenwirkt.

8. Trommelbremse nach Anspruch 7, dadurch gekennzeichnet, daß der am Betätigungshebel (46) gebildete Endanschlag (70) gebildet ist durch eine Niete, eine Schraube, einen Stift oder eine am Betätigungshebel (46) angeformte Lasche, die im wesentlichen rechtwinklig umgebogen ist.

9. Trommelbremse nach einem der vorhergehenden Ansprüche, dadurch gekennzeichnet, daß sie zusätzlich eine Betätigungsvorrichtung (22) enthält.

10. Trommelbremse nach Anspruch 9, dadurch gekennzeichnet, daß das Zwischenelement Mittel (72) zum automatischen Ausgleichen der Abnutzung der Reibbeläge (20) enthält.

11. Trommelbremse nach einem der Ansprüche 2 bis 10, dadurch gekennzeichnet, daß in der in der Trägerplatte (10) angebrachten Öffnung (54) eine elastische Kappe (74) angeordnet ist, um die Dichtigkeit der Trägerplatte (10), des Betätigungshebels (46) und des Fortsatzes (60) des Zwischenelements (40) zu gewährleisten.

## Claims

1. Drum brake having two shoes (12, 14) each presenting a web (16) and a rim (18) whose face facing the drum receives a friction lining (20), the drum brake being arranged on a support plate (10), the web (16) of each shoe (12, 14) possessing a notch cooperating with a strut (40) determining the separation of the shoes (12, 14), the strut (40) bearing in the neighborhood of one of its ends (50) a pivot (52) on which is articulated an actuating lever (46) extending substantially perpendicularly to the support plate (10) through an opening (54) made in the latter and capable of cooperating with one of the shoes, characterized in that the actuation of the drum brake is obtained by a simultaneous action and reaction on the actuating lever (46) and on the strut (40).

2. Drum brake according to claim 1, characterized in that the strut (40) possesses an extension (60) extending substantially perpendicularly to the support plate (10) through the opening (54) made in the latter.

3. Drum brake according to claim 2, characterized in that the extension (60) of the strut (40) possesses a part (62) extending in a plane substantially perpendicular to that of the strut (40) and to that of the support plate (10), on which a stop (62) is formed.

4. Drum brake according to claim 3, characterized in that it is actuated by a cable (56) having a sheath (64), the cable (56) possessing at its end a ferule (57), the sheath (64) and the ferule (57) each bearing on a stop (62, 55), the one (62) being formed on the extension (60) of the strut (40), the other (55) being formed on the actuating lever (46).

5. Drum brake according to claim 4, characterized in that a return spring (66) is arranged between the stop (55) formed on the actuating lever (46) and the stop (62) formed on the extension (60) of the strut (40).

6. Drum brake according to claim 5, characterized in that a flexible bellows (68) is arranged round the return spring (66) between the stop (55) formed on the actuating lever (46) and the stop (62) formed on the extension (60) of the strut (40).

7. Drum brake according to claim 5, characterized in that the actuating lever (46) possesses an end stop (70) cooperating with the extension (60) formed on the strut (40) under the influence of the return spring (66).

8. Drum brake according to claim 7, characterized in that the end stop (70) formed on the actuating lever (46) is constituted by a rivet, a screw, a pin or a lug integral with the actuating lever (46) and bent through an angle of substantially 90°.

9. Drum brake according to any of the preceding claims, characterized in that it possesses, in addition, an actuating motor (22).

10. Drum brake according to claim 9, characterized in that the strut possesses means (72) for automatically compensating the wear of the friction linings (20).

11. Drum brake according to any one of claims 2 to 10, characterized in that a flexible cap (74) is arranged in the opening (54) made in the support plate (10) to ensure the imperviousness of the support plate (10), the actuating lever (46) and the extension (60) of the strut (40).
